# FASCICULE DE BREVET EUROPEEN

(11) **EP 1 382 640 B1**
(45) Date de publication et mention de la délivrance du brevet: **09.07.2008**
(21) Numéro de dépôt: 03291603.3
(22) Date de dépôt: 30.06.2003
(51) Int. Cl.: C08L 33/12, C08L 51/00, C08L 27/16, C08L 33/08

(54) **Composition coextrudable avec le PVDF**
Mit PVDF coextrudierbare Zusammensetzung
Composition coextrudable with PVDF

(30) Priorité: 17.07.2002 FR 0209024; 27.09.2002 FR 0211991
(43) Date de publication de la demande: 21.01.2004
(73) Titulaire: ARKEMA FRANCE, 92700 Colombes (FR)
(72) Inventeur: Bonnet, Anthony, 27170 Beaumont le Roger (FR); Beaume, François, 27300 Bernay (FR); Loyen, Karine, 27500 Pont-Audemer (FR); Triballier, Karine, 27800 Saint-Eloi de Fourques (FR); Silagy, David, 27000 Evreux (FR)

(56) Documents cités:
- Aucun document pertinent relevé

## Description

Le PVDF (polyfluorure de vinylidène) en raison de sa très bonne résistance aux intempéries, au rayonnement et aux produits chimiques est utilisé pour protéger des objets ou des matériaux. De plus il est apprécié pour son aspect brillant et sa résistance aux graffitis. On est donc amené à revêtir toutes sortes de substrats avec un film de PVDF. Cependant le PVDF adhère très mal sur la plupart des substrats, il est donc nécessaire de disposer une composition adhésive entre le PVDF et le substrat. La présente invention concerne cette composition.

Avantageusement cette composition est coextrudée avec le PVDF pour former un film bicouche puis ce film est ensuite fixé sur le substrat par exemple par pressage à chaud. On peut aussi disposer le film bicouche dans un moule, la couche de PVDF étant disposée contre la paroi du moule, puis injecter le substrat à l'état fondu dans le moule. On peut aussi, selon la nature du substrat, coextruder le PVDF, la composition adhésive et le substrat pour obtenir directement le substrat revêtu de PVDF et la composition adhésive étant entre le PVDF et le substrat.

### [L'art antérieur et le problème technique]

Le brevet GB 1578517 décrit de l'ABS revêtu par un film de PVDF, une couche de polyuréthane peut être disposée entre le PVDF et l'ABS.

Le brevet US 4226904 décrit du PMMA recouvert par un film de PVDF. Pour améliorer l'adhésion on dépose sur le film de PVDF une solution de PMMA dans le dimethylformamide et après évaporation du solvant on presse le film de PVDF sur le PMMA.

Le brevet US 4415519 décrit un substrat en ABS ou en PVC recouvert par un film de PVDF, un adhésif est disposé entre le PVDF et le substrat. Cet adhésif peut être soit du PMMA soit un mélange en poids de 40% de PMMA, 30% de PVDF et 30% d'ABS soit encore un mélange en poids de 30% de PMMA, de 40% d'un dérivé polyacrylique et de 30% d'ABS.

Le brevet US 4364886 décrit un substrat en ABS ou en polyester insaturé recouvert par un film de PVDF, un adhésif est disposé entre le PVDF et le substrat. Cet adhésif est un mélange en poids de 30% de PMMA, de 40% d'un élastomère acrylique et de 30% d'ABS.

Le brevet US 5242976 décrit une composition coextrudable avec le PVDF pour le faire adhérer sur des substrats. La composition est un mélange en poids de 27 à 50% de PMMA, de 17,5 à 36,5% de PVDF et de 25 à 47,45% d'un élastomère acrylique.

Dans tous ces arts antérieurs ci dessus il n'est pas fait mention d'additifs anti UV dans la composition adhésive.

Le brevet EP 733 475 B1 décrit des substrats revêtus de PVDF, la structure comprend successivement le substrat, une couche adhésive, une couche de PVDF rendue opaque aux UV et au rayonnement visible et une couche de PVDF. On obtient la couche de PVDF opaque en ajoutant au PVDF un produit choisi parmi les oxydes de métaux, les pigments et les benzophénones. Les exemples n'illustrent que le PVDF chargé avec 15% en poids d'oxyde de zinc.

Le brevet US 5256472 décrit des films bicouches comprenant une première couche constituée essentiellement de PVDF et d'une quantité minoritaire de PMMA et une deuxième couche destinée à assurer l'adhésion sur un substrat. Cette couche adhésive est constituée en poids de 50 à 95 (de préférence 70 à 90) parties de PMMA, de 5 à 50 (de préférence 10 à 30) parties de PVDF et de 0,1 à 15 parties d'un absorbeur UV. Il est expliqué que la présence de l'absorbeur UV est nécessaire parce que cette couche adhésive est sensible au rayonnement et que si on ne met pas d'absorbeur UV alors l'adhésif se détruit et la couche constituée essentiellement de PVDF se décolle du substrat. Le PMMA désigne les homopolymères du méthacrylate de méthyle ou les copolymères du méthacrylate de méthyle avec un monomère copolymérisable et aussi les mélanges avec un caoutchouc acrylate (acrylate rubber) mais sans préciser les proportions de PMMA et de caoutchouc. Il est précisé aussi que si la proportion de PMMA est inférieure à 50 parties il y a exsudation de l'anti UV. Ce document ne le précise pas mais on a découvert que cette exsudation nuit à la transparence des films et surtout provoque un décollement. De plus ces films n'ont aucune tenue mécanique ce qui rend leur manipulation difficile. Il est nécessaire que la couche adhésive contienne un élastomère, en effet sans élastomère l'adhésion n'est pas bonne et le film n'a pas de tenue mécanique. Selon l'enseignement de US 5242976 déjà cité cette proportion doit être entre 25 et 47,45% mais ces proportions provoquent un défaut de résistance au rayonnement.

On a maintenant trouvé une composition coextrudable avec le PVDF telle que les anti UV n'exsudent plus, telle que le film bicouche PVDF / composition coextrudable ait un bonne tenue mécanique, qui provoque une excellente adhésion de la couche de PVDF sur le substrat et qui résiste au rayonnement.

### [Brève description de l'invention]

La présente invention concerne une composition coextrudable avec le PVDF et comprenant :
- 20 à 40 parties de PVDF,
- 40 à 60 parties de PMMA,
- 5 à 18 parties d'un élastomère acrylique,
- 1 à 4 parties d'un absorbeur UV,
- le total faisant 100 parties.

L'invention concerne aussi des films coextrudés constitués :
- d'une couche de la composition coextrudable précédente (aussi appelée couche adhésive) et directement attachée à celle ci,
- une couche à base de PVDF comprenant comme constituants principaux 50 à 100 parties de PVDF pour respectivement 50 à 0 parties de PMMA (cette couche est aussi appelée par simplification "couche de PVDF").

Selon une deuxième forme de l'invention la couche de PVDF se présente sous forme de 2 couches :
- l'une disposée contre la couche coextrudable et comprenant comme constituants principaux 50 à 90 parties de PVDF pour respectivement 50 à 10 parties de PMMA,
- l'autre (appellée aussi couche extérieure) comprenant comme constituants principaux 75 à 100 parties de PVDF pour respectivement 25 à 0 parties de PMMA.

Ces films présentent des propriétés mécaniques suffisantes pour permettre leur manipulation, leur mise en oeuvre et leur utilisation comme revêtement transparent à la lumière visible mais opaque aux rayonnements UV.

L'invention concerne aussi les substrats revêtus de ce film, la composition coextrudable (adhésive) étant disposée contre le substrat.

### [Description détaillée de l'invention]

**S'agissant du PVDF** on désigne ainsi les PVDF, homopolymères du fluorure de vinylidène (VF2) et les copolymères du fluorure de vinylidène (VF2) contenant de préférence au moins 50 % en poids de VF2 et au moins un autre monomère copolymérisable avec le VF2. Avantageusement le comonomère est fluoré, il peut être choisi par exemple parmi le fluorure de vinyle; le trifluoroethylene (VF3); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro( 1,3 -dioxole); le perfluoro(2,2-dimethyl- 1,3 -dioxole) (PDD). De préférence le comonomère éventuel est choisi parmi le chlorotrifluoroéthylène (CTFE), l'hexafluoropropylène (HFP), le trifluoroéthylène (VF3) et le tétrafluoroéthylène (TFE).

Avantageusement, le PVDF a une viscosité allant de 100 Pa.s à 2000 Pa.s, la viscosité étant mesurése à 230°C, à un gradient de cisaillement de 100 s⁻¹ à l'aide d'un rhéomètre capillaire. En effet, ces PVDF sont bien adaptés à l'extrusion et a l'injection. De préférence, le PVDF a une viscosité allant de 300 Pa.s à 1200 Pa.s, la viscosité étant mesurée à 230°C, à un gradient de cisaillement de 100s⁻¹ à l'aide d'un rhéomètre capillaire.

**S'agissant du PMMA** on désigne ainsi les homopolymères du méthacrylate de méthyle et les copolymères contenant au moins 50% en poids de méthacrylate de méthyle. A titre d'exemple de comonomère on peut citer par exemple les (méth)acrylates d'alkyle, l'acrylonitrile, le butadiène, le styrène, l'isoprène. Des exemples de (méth)acrylates d'alkyle sont décrits dans KIRK-OTHMER, Encyclopedia of chemical technology, 4 ème édition dans le Vol 1 pages 292-293 et dans le Vol 16 pages 475-478. Avantageusement le PMMA peut contenir 0 à 20% en poids et de préférence 5 à 15% d'acrylate de méthyle et/ou d'acrylate d'éthyle. Le PMMA peut être fonctionnalisé c'est à dire qu'il contient par exemple des fonctions acide, chlorure d'acide, alcool, anhydride. Ces fonctions peuvent être introduites par greffage ou par copolymérisation. Avantageusement c'est une fonction acide apportée par le comonomère acide acrylique. Deux fonctions acide acrylique voisines peuvent se deshydrater pour former un anhydride. La proportion de fonctions peut être de 0 à 15% en poids du PMMA comprenant les fonctions éventuelles.

Le MVI (melt volume index ou indice de fluidité en volume à l'état fondu) du PMMA peut être compris entre 2 et 15 cm3/10 min mesuré à 230°C sous une charge de 3,8 kg.

**S'agissant de l'élastomère acrylique** on désigne ainsi les élastomères à base d'au moins un monomère choisi parmi l'acrylonitrile, les (meth)acrylate d'alkyle et les core shell (coeur écorce). S'agissant du copolymère coeur - écorce il se présente sous la forme de fines particules ayant un coeur en élastomère et au moins une écorce thermoplastique, la taille des particules est en général inférieure au µm et avantageusement comprise entre 50 et 300 nm. A titre d'exemple de coeur on peut citer les homopolymères de l'isoprène ou du butadiène, les copolymères de l'isoprène avec au plus 30% en moles d'un monomère vinylique et les copolymères du butadiène avec au plus 30% en moles d'un monomère vinylique. Le monomère vinylique peut être le styrène, un alkylstyrène, l'acrylonitrile ou un (meth)acrylate d'alkyle. Une autre famille de coeur est constituée par les homopolymères d'un (meth)acrylate d'alkyle et les copolymères d'un (meth)acrylate d'alkyle avec au plus 30% en moles d'un monomère choisi parmi un autre (meth)acrylate d'alkyle et un monomère vinylique. Le (meth)acrylate d'alkyle est avantageusement l'acrylate de butyle. Le monomère vinylique peut être le styrène, un alkylstyrène, l'acrylonitrile, le butadiène ou l'isoprène. Le coeur du copolymère coeur écorce peut être réticulé en tout ou partie. Il suffit d'ajouter des monomères au moins difonctionnels au cours de la préparation du coeur, ces monomères peuvent être choisis parmi les esters poly(meth)acryliques de polyols tels que le di(meth)acrylate de butylène et le trimethylol propane trimethacrylate. D'autres monomères difonctionnels sont par exemple le divinylbenzène, le trivinylbenzène, l'acrylate de vinyle et le methacrylate de vinyle. On peut aussi réticuler le coeur en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (meth)acrylique et le méthacrylate de glycidyle.

L'écorce ou les écorces sont des homopolymères du styrène, d'un alkylstyrène ou du méthacrylate de méthyle ou des copolymères comprenant au moins 70% en moles de l'un de ces monomères précédents et au moins un comonomère choisi parmi les autres monomères précédents, un autre (meth)acrylate d'alkyle, l'acétate de vinyle et l'acrylonitrile. L'écorce peut être fonctionnalisée en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (meth)acrylique et le méthacrylate de glycidyle. A titre d'exemple on peut citer des copolymères coeur - écorce ayant une écorce en polystyrène et des copolymères coeur - écorce ayant une écorce en PMMA. Il existe aussi des copolymères coeur - écorce ayant deux écorces , l'une en polystyrène et l'autre à l'exterieur en PMMA. Des exemples de copolymère ainsi que leur procédé de préparation sont décrits dans les brevets suivants : US 4 180 494, US 3 808 180, US 4096 202, US 4 260 693, US 3 287 443, US 3 657 391, US 4 299 928, US 3 985 704, US5773520.

Avantageusement le coeur représente, en poids, 70 à 90% du copolymère coeur écorce et l'écorce 30 à 10%.

A titre d'exemple de copolymère on peut citer celui constitué (i) de 75 à 80 parties d'un coeur comprenant en moles au moins 93% de butadiène, 5% de styrène et 0,5 à 1 % de divinylbenzène et (ii) de 25 à 20 parties de deux écorces essentiellement de même poids l'une intérieure en polystyrène et l'autre extérieure en PMMA.

A titre d'autre exemple on peut citer ceux ayant un coeur en poly(acrylate de butyle) ou en copolymère de l'acrylate de butyle et du butadiène et une écorce en PMMA.

Tous ces copolymères coeur écorce sont parfois appelés mou / dur à cause du coeur en élastomère.

Il existe aussi d'autres types de copolymères coeur écorce tels que les dur / mou / dur c'est à dire qu'ils ont dans cet ordre un coeur dur, une écorce molle et une écorce dure. Les parties dures peuvent être constituées des polymères de l'écorce des mou / dur précédents et la partie molle peut être constituée des polymères du coeur des mou / dur précédents.

On peut citer par exemple ceux constitués dans cet ordre :
d'un coeur en copolymère du méthacrylate de méthyle et de l'acrylate d'éthyle,
d'une écorce en copolymère de l'acrylate de butyle et du styrène,
d'une écorce en copolymère du méthacrylate de méthyle et de l'acrylate d'éthyle.

Il existe encore d'autres types de copolymères coeur écorce tels que les dur (le coeur) / mou / mi dur. Par rapport aux précédents la différence vient de l'écorce extérieure "mi dur" qui est constituée de deux écorces : l'une intermédiaire et l'autre extérieure. L'écorce intermédiaire est un copolymère du méthacrylate de méthyle, du styrène et d'au moins un momère choisi parmi les acrylates d'alkyle, le butadiène et l'isoprène. L'écorce extérieure est un PMMA homopolymère ou copolymère.

On peut citer par exemple ceux constitués dans cet ordre:
d'un coeur en copolymère du méthacrylate de méthyle et de l'acrylate d'éthyle,
d'une écorce en copolymère de l'acrylate de butyle et du styrène,
d'une écorce en copolymère du méthacrylate de méthyle, de l'acrylate de butyle et du styrène,
d'une écorce en copolymère du méthacrylate de méthyle et de l'acrylate d'éthyle.

En choisissant les proportions d'élastomère acrylique il faut tenir compte de celui qui peut être déjà contenu dans le PMMA. En effet il existe des qualités commerciales de PMMA dites "qualité choc" qui contiennent des modifiants choc acryliques le plus souvent de type coeur écorce. Ces modifiants choc acryliques peuvent aussi être présents dans le PMMA parce qu'ils ont été introduits au cours de sa polymérisation ou préparés simultanément au cours de sa polymérisation.

**S'agissant de l'absorbeur UV** ces produits sont connus en eux mêmes. De tels produits sont cités dans le brevet US 5256472. On utilise avantageusement les benzotriazoles et les benzophénones. A titre d'exemple on peut utiliser les Tinuvin® 213 ou Tinuvin® 109 et de façon préférable le Tinuvin® 234 de la société Ciba Speciality Chemicals.

La composition coextrudable avec le PVDF comprend avantageusement:
- 25 à 35 parties de PVDF,
- 45 à 55 parties de PMMA,
- 8 à 18 parties d'un élastomère acrylique,
- 2 à 3 parties d'un absorbeur UV,
- le total faisant 100 parties.
La composition coextrudable avec le PVDF comprend de préférence:
- 30 à 35 parties de PVDF,
- 50 à 55 parties de PMMA,
- 8 à 12 parties d'un élastomère acrylique,
- 2 à 3 parties d'un absorbeur UV,
- le total faisant 100 parties.

La composition coextrudable peut être préparée par mélange du PVDF, du PMMA et de l'élastomère acrylique à l'état fondu dans lequel on ajoute l'absorbeur UV. On utilise avantageusement les dispositifs de mélange des thermoplastiques.

S'agissant du film coextrudé constitué de la composition coextrudable et de la couche de PVDF l'épaisseur de la couche de PVDF est avantageusement comprise entre 2 et 50 µm et celle de la composition coextrudable entre 10 et 100 µm.

Avantageusement la couche à base de PVDF comprend comme constituants principaux 70 à 100 parties de PVDF pour respectivement 30 à 0 parties de PMMA et de préférence 75 à 85 parties de PVDF pour respectivement 25 à 15 parties de PMMA.

Selon une deuxième forme de l'invention la couche de PVDF se présente sous forme de 2 couches :
- l'une disposée contre la couche coextrudable et comprenant comme constituants principaux 50 à 90 parties de PVDF pour respectivement 50 à 10 parties de PMMA,
- l'autre (appellée aussi couche extérieure) comprenant comme constituants principaux 75 à 100 parties de PVDF pour respectivement 25 à 0 parties de PMMA
C'est à dire que les films de l'invention comprennent dans l'ordre :
- une couche coextrudable de la composition de l'invention (la couche adhésive),
- une couche disposée contre la couche coextrudable et comprenant comme constituants principaux 50 à 90 parties de PVDF pour respectivement 50 à 10 parties de PMMA,
- une couche (appellée aussi couche extérieure) comprenant comme constituants principaux 75 à 100 parties de PVDF pour respectivement 25 à 0 parties de PMMA.

Avantageusement la couche extérieure comprend comme constituants principaux 85 à 100 parties de PVDF pour respectivement 15 à 0 parties de PMMA et de préférence 90 à 100 parties de PVDF pour respectivement 10 à 0 parties de PMMA.

L'épaisseur de la couche de composition coextrudable est avantageusement comprise entre 10 et 100 µm et celle de chacune des autres couches est avantageusement comprise entre 2 et 50µm.

L'invention concerne aussi les substrats revêtus de ce film, la composition coextrudable étant disposée contre le substrat.

**S'agissant du substrat** on peut citer à titre d'exemple :
- les polymères chlorés : PVC, PVC plastifié, PE chloré
- les polymères et copolymères contenant du styrène tel que ABS, SAN, PS,
- les polyesters saturés (PET, PBT, ...) et copolyesters ou mélanges, les résines polyesters insaturées (SMC),
- les résines époxy et phénoliques,
- les copolymères de l'éthylène et d'alkylacrylate ou d'acétate de vinyle (EMA, EVA) fonctionnalisés ou non,
- les PA (polyamides) et CoPA (copolyamides), PEBA, polyesteramides et TPU (polyurethane thermoplastique, abréviation de Thermoplastic polyurethane),
- EVOH (copolymère de l'éthylène et de l'alcool vinylique),
- l'aluminium, l'acier ou des mélanges de métaux,
- les composites à base de lignine,
- les composés acryliques (PMMA, ...),
- le verre,
- les mousses PVC, PU.

### [Exemples]

On a utilisé les produits suivants :
**Kynar® 720** : PVDF homopolymère de la société ATOFINA et de MVI (Melt Volume Index ou indice de fluidité en volume à l'état fondu) 10 cm³/10 min (230°C , 5kg).
**Kynar® 740** : PVDF homopolymère de la société ATOFINA et de MVI (Melt Volume Index ou indice de fluidité en volume à l'état fondu) 1,1 cm³/10 min (230°C , 5kg).
**OROGLAS® BS8** : PMMA de la société ATOGLAS de MVI 4.5 cm³/10 min (230°C, 3.8kg) sous forme de perle contenant un comonomére acrylate de méthyle à hauteur de 12%.
**OROGLAS® V 825 T** : PMMA de la société ATOGLAS de MVI 2.5 cm³/10 min (230°C , 3,8kg).
**Tinuvin® 109** : absorbeur UV de type benzotriazole vendu par Ciba Speciality Chemicals.
**Tinuvin® 213** : absorbeur UV de type hydroxy phényl benzotriazole vendu par Ciba Speciality Chemicals.
**Tinuvin® 234** : absorbeur UV de type hydroxy phényl benzotriazole vendu par Ciba Speciality Chemicals.
**D320 :** abréviation de Durastrengh® D320, désigne un élastomère coeur écorce mou / dur dont le coeur est un copolymère de l'acrylate de butyle et du butadiène et l'écorce est en PMMA de dimension 80 nm vendu par la société CECA.
**Paraloïd®KM 355** : désigne un élastomère coeur écorce mou / dur dont le coeur est un homopolymère de l'acrylate de butyle et l'écorce est en PMMA de dimension 150 nm vendu par la société Rhom et Haas.
Les compositions dans les exemples sont en % poids.

### Exemple 1 (selon l'invention)

Un film bicouche contenant une couche composée de 80% de PVDF Kynar 720 et 20% d'altuglas BS8 de 15 µm d'épaisseur et un liant de 35 µm d'épaisseur suivant la formulation suivante :Kynar 720 31,8%, 51.7% d'altuglas BS8, 2.5% de Tinuvin 234 et 15% de D320, ce film présente un allongement rupture de 197%, un haze de 14 et après 7 jours passés en étuve aucune exsudation n'est observable. Ce film présente une absorbance UV suffisante pour son utilisation dans des applications extérieures.

### Exemple 2 : (selon l'invention)

Un film bicouche contenant une couche composée de 80% de PVDF Kynar 720 et 20% d'altuglas BS8 de 15 µm d'épaisseur et un liant de 35 µm d'épaisseur suivant la formulation suivante :Kynar 740 33,6%, 53.9% d'altuglas BS8, 2.5% de Tinuvin 234 et 10% de D320, ce film présente une allongement rupture de 210%, un haze de 11 et après 7 jours passés en étuve aucune exsudation n'est observable. Ce film présente une absorbance UV suffisante pour son utilisation dans des applications extérieures.

### Exemple 3 : (selon l'invention)

Un film bicouche contenant une couche composée de 80% de PVDF Kynar 740 et 20% d'altuglas BS8 de 15 µm d'épaisseur et un liant de 35 µm d'épaisseur suivant la formulation suivante :Kynar 740 33,6%, 53.9% d'altuglas BS8, 2.5% de Tinuvin 109 et 10% de D320, ce film présente une allongement rupture de 150%, un haze de 8 et après 7 jours passés en étuve aucune exsudation n'est observable. Ce film présente une absorbance UV suffisante pour son utilisation dans des applications extérieures.

### Exemple 4 : (selon l'invention)

Un film bicouche contenant une couche composée de 80% de PVDF Kynar 740 et 20% d'altuglas BS8 de 15 µm d'épaisseur et un liant de 35 µm d'épaisseur suivant la formulation suivante :Kynar 740 33,6%, 53.9% d'altuglas BS8, 2.5% de Tinuvin 213 et 10% de D320, ce film présente une allongement rupture de 150%, un haze de 6,5 et après 7 jours passés en étuve aucune exsudation n'est observable. Ce film présente une absorbance UV suffisante pour son utilisation dans des applications extérieures.

### Exemple 5 : (Selon l'invention)

Un film bicouche contenant une couche composée de 80% de PVDF Kynar 740 et 20% d'altuglas BS8 de 15 µm d'épaisseur et un liant de 35 µm d'épaisseur suivant la formulation suivante :Kynar 740 33,6%, 53.9% d'altuglas BS8, 2.5% de Tinuvin 234 et 10% de D320, ce film présente une allongement rupture de 150%, un haze de 6,5 et après 7 jours passés en étuve aucune exsudation n'est observable. Ce film présente une absorbance UV suffisante pour son utilisation dans des applications extérieures.

### Exemple 6 : (comparatif)

Un film bicouche contenant une couche composée de 80% de PVDF Kynar 720 et 20% d'oroglas V825T de 15 µm d'épaisseur et un liant de 35 µm d'épaisseur suivant la formulation suivante :Kynar 720 32.5%, 32.5% d'oroglas V825T, 2.5% de Tinuvin 234 et 32.5% de Paraloid KM355, ce film présente une allongement rupture de 150%, un haze de 15 et après 1 jour passé en étuve une exsudation est observable. Ce film présente une absorbance UV non suffisante pour son utilisation dans des applications extérieures.

### Exemple 7 : (Comparatif)

Un film bicouche contenant une couche composée de 80% de PVDF Kynar 720 et 20% d'oroglas V825T de 15 µm d'épaisseur et un liant de 35 µm d'épaisseur suivant la formulation suivante :Kynar 720 32.5%, 32.5% d'oroglas V825T, 2.5% de Tinuvin 234 et 32.5% de Durastrength D320, ce film présente une allongement rupture de 150%, un haze de 15 et après 1 jour passé en étuve une exsudation est observable. Ce film présente une absorbance UV non suffisante pour son utilisation dans des applications extérieures.

## Revendications

1. Composition coextrudable avec le PVDF et comprenant :
• 20 à 40 parties de PVDF,
• 40 à 60 parties de PMMA,
• 5 à 18 parties d'un élastomère acrylique,
• 1 à 4 parties d'un absorbeur UV,
• le total faisant 100 parties.

2. Composition selon la revendication 1 dans laquelle les proportions sont avantageusement:
• 25 à 35 parties de PVDF,
• 45 à 55 parties de PMMA,
• 8 à 18 parties d'un élastomère acrylique,
• 2 à 3 parties d'un absorbeur UV,
• le total faisant 100 parties.

3. Composition selon la revendication 2 dans laquelle les proportions sont avantageusement:
• 30 à 35 parties de PVDF,
• 50 à 55 parties de PMMA,
• 8 à 12 parties d'un élastomère acrylique,
• 2 à 3 parties d'un absorbeur UV,
• le total faisant 100 parties.

4. Composition selon l'une quelconque des revendications précédentes dans laquelle l'élastomère acrylique est un copolymère coeur écorce.

5. Composition selon la revendication 4 dans laquelle le copolymère coeur écorce est choisi parmi les mou / dur, les dur / mou / dur et les dur / mou / mi dur.

6. Films coextrudés constitués :
• d'une couche de la composition coextrudable selon l'une quelconque des revendications précédentes et directement attachée à celle ci,
• une couche à base de PVDF comprenant comme constituants principaux 50 à 100 parties de PVDF pour respectivement 50 à 0 parties de PMMA

7. Films selon la revendication 6 dans lesquels la couche à base de PVDF comprend comme constituants principaux 70 à 100 parties de PVDF pour respectivement 30 à 0 parties de PMMA.

8. Films selon la revendication 7 dans lesquels la couche à base de PVDF comprend comme constituants principaux 75 à 85 parties de PVDF pour respectivement 25 à 15 parties de PMMA.

9. Films selon l'une quelconque des revendications 6 à 8 dans lesquels l'épaisseur de la couche de PVDF est avantageusement comprise entre 2 et 50 µm et celle de la composition coextrudable entre 10 et 100 µm.

10. Films coextrudés comprenant dans l'ordre :
• une couche coextrudable de la composition selon l'une quelconque des revendications 1 à 5 (la couche adhésive),
• une couche disposée contre la couche coextrudable et comprenant comme constituants principaux 50 à 90 parties de PVDF pour respectivement 50 à 10 parties de PMMA,
• une couche (appellée aussi couche extérieure) comprenant comme constituants principaux 75 à 100 parties de PVDF pour respectivement 25 à 0 parties de PMMA.

11. Films selon la revendication 10 dans lesquels la couche extérieure comprend comme constituants principaux 85 à 100 parties de PVDF pour respectivement 15 à 0 parties de PMMA.

12. films selon l'une quelconque des revendications 10 à 11 dans lesquels l'épaisseur de la couche de composition coextrudable est avantageusement comprise entre 10 et 100 µm et celle de chacune des autres couches est avantageusement comprise entre 2 et 50µm.

13. Substrats revêtus d'un film selon l'une quelconque des revendications 6 à 12, la composition coextrudable étant disposée contre le substrat.

## Claims

1. Composition coextrudable with PVDF and comprising:
• 20 to 40 parts of PVDF;
• 40 to 60 parts of PMMA;
• 5 to 18 parts of an acrylic elastomer;
• 1 to 4 parts of a UV absorber;
• the total making 100 parts.

2. Composition according to Claim 2 in which the proportions are advantageously:
• 25 to 35 parts of PVDF;
• 45 to 55 parts of PMMA;
• 8 to 18 parts of an acrylic elastomer;
• 2 to 3 parts of a UV absorber;
• the total making 100 parts.

3. Composition according to Claim 2 in which the proportions are advantageously:
• 30 to 35 parts of PVDF;
• 50 to 55 parts of PMMA;
• 8 to 12 parts of an acrylic elastomer;
• 2 to 3 parts of a UV absorber;
• the total making 100 parts.

4. Composition according to any one of the preceding claims, in which the acrylic elastomer is a core-shell copolymer.

5. Composition according to Claim 4, in which the core-shell copolymer is chosen from soft/hard, hard/soft/hard and hard/soft/semi-hard copolymers.

6. Coextruded films consisting of:
• a layer of the coextrudable composition according to any one of the preceding claims directly attached to the latter; and
• a PVDF-based layer comprising, as main constituents, 50 to 100 parts of PVDF per 50 to 0 parts of PMMA respectively.

7. Films according to Claim 6, in which the PVDF-based layer comprises, as main constituents, 70 to 100 parts of PVDF per 30 to 0 parts of PMMA respectively.

8. Films according to Claim 7, in which the PVDF-based layer comprises, as main constituents, 75 to 85 parts of PVDF per 25 to 15 parts of PMMA respectively.

9. Films according to any one of Claims 6 to 8, in which the thickness of the PVDF layer is advantageously between 2 and 50 µm and that of the coextrudable composition between 10 and 100 µm.

10. Coextruded films comprising, in the following order:
• a coextrudable layer of the composition according to any one of Claims 1 to 5 (the adhesive layer);
• a layer placed against the coextrudable layer and comprising, as main constituents, 50 to 90 parts of PVDF per 50 to 10 parts of PMMA respectively; and
• a layer (also called the outer layer) comprising, as main constituents, 75 to 100 parts of PVDF per 25 to 0 parts of PMMA respectively.

11. Films according to Claim 10, in which the outer layer comprises, as main constituents, 85 to 100 parts of PVDF per 15 to 0 parts of PMMA respectively.

12. Films according to either of Claims 10 and 11, in which the thickness of the layer of coextrudable composition is advantageously between 10 and 100 µm and that of each of the other layers is advantageously between 2 and 50 µm.

13. Substrates coated with a film according to any one of Claims 6 to 12, the coextrudable composition being placed against the substrate.

## Patentansprüche

1. Mit PVDF coextrudierbare Zusammensetzung, umfassend:
• 20 bis 40 Teile PVDF,
• 40 bis 60 Teile PMMA,
• 5 bis 18 Teile eines Acrylelastomers,
• 1 bis 4 Teile eines UV-Absorbers,
• wobei die Gesamtmenge 100 Teile ausmacht.

2. Zusammensetzung nach Anspruch 1, worin die Anteile vorteilhafterweise wie folgt sind:
• 25 bis 35 Teile PVDF,
• 45 bis 55 Teile PMMA,
• 8 bis 18 Teile eines Acrylelastomers,
• 2 bis 3 Teile eines UV-Absorbers,
• wobei die Gesamtmenge 100 Teile ausmacht.

3. Zusammensetzung nach Anspruch 2, worin die Anteile vorteilhafterweise wie folgt sind:
• 30 bis 35 Teile PVDF,
• 50 bis 55 Teile PMMA,
• 8 bis 12 Teile eines Acrylelastomers,
• 2 bis 3 Teile eines UV-Absorbers,
• wobei die Gesamtmenge 100 Teile ausmacht.

4. Zusammensetzung nach einem der vorhergehenden Ansprüche, worin das Acrylelastomer ein Kern-Schale-Copolymer ist.

5. Zusammensetzung nach Anspruch 4, worin das Kern-Schale-Copolymer ausgewählt ist aus weich-hart, hart/weich/hart und hart/weich/halbhart.

6. Coextrudierte Filme, bestehend aus:
• einer Schicht aus der coextrudierbaren Zusammensetzung nach einem der vorhergehenden Ansprüche und direkt an dieser angebracht,
• einer Schicht auf der Basis von PVDF, umfassend als Hauptbestandteile 50 bis 100 Teile PVDF für jeweils 50 bis 0 Teile PMMA.

7. Filme nach Anspruch 6, worin die Schicht auf der Basis von PVDF als Hauptbestandteile 70 bis 100 Teile PVDF für jeweils 30 bis 0 Teile PMMA umfasst.

8. Filme nach Anspruch 7, worin die Schicht auf der Basis von PVDF als Hauptbestandteile 75 bis 85 Teile PVDF für jeweils 25 bis 15 Teile PMMA umfasst.

9. Filme nach einem der Ansprüche 6 bis 8, worin die Dicke der Schicht aus PVDF vorteilhafterweise im Bereich zwischen 2 und 50 µm und die der coextrudierbaren Zusammensetzung zwischen 10 und 100 µm liegt.

10. Coextrudierte Filme, umfassend in folgender Reihenfolge:
• eine coextrudierbare Schicht der Zusammensetzung nach einem der Ansprüche 1 bis 5 (die Klebeschicht),
• eine Schicht, die gegen die coextrudierbare Schicht angeordnet ist, und umfassend als Hauptbestandteile 50 bis 90 Teile PVDF für jeweils 50 bis 10 Teile PMMA,
• eine Schicht (auch äußere Schicht genannt), umfassend als Hauptbestandteile 75 bis 100 Teile PVDF für jeweils 25 bis 0 Teile PMMA.

11. Filme nach Anspruch 10, worin die äußere Schicht als Hauptbestandteile 85 bis 100 Teile PVDF für jeweils 15 bis 0 Teile PMMA umfasst.

12. Filme nach einem der Ansprüche 10 bis 11, worin die Dicke der Schicht aus der coextrudierbaren Zusammensetzung vorteilhafterweise im Bereich zwischen 10 und 100 µm und jede der anderen Schichten vorteilhafterweise im Bereich zwischen 2 und 50 µm liegt.

13. Substrate, die mit einem Film nach einem der Ansprüche 6 bis 12 überzogen sind, wobei die coextrudierbare Zusammensetzung gegen das Substrat angeordnet ist.
